# EUROPEAN PATENT APPLICATION

(11) **EP 4 534 881 A1**
(43) Date of publication of application: **09.04.2025**
(21) Application number: 23815660.8
(22) Date of filing: 28.04.2023
(51) Int. Cl.: F16L 11/06, B29C 48/10

(54) **FLEXIBLE TUBE**

(30) Priority: 02.06.2022 JP 2022090055
(71) Applicant: Toyox Co., Ltd., Kurobe-shi Toyama 938-8585 (JP)
(72) Inventor: NUMATA, Kenichi, Kurobe-shi, Toyama 938-8585 (JP); KONISHI, Takumi, Kurobe-shi, Toyama 938-8585 (JP)
(74) Representative: v. Bezold & Partner Patentanwälte - PartG mbB
(86) International application number: PCT/JP2023/016919
(87) International publication number: WO 2023/233899

(57) **Abstract**

This flexible tube is formed by molding a thermoplastic resin composition into a tubular shape, has favorable physical properties for a roller pump or the like, and has high durability. The resin composition does not exhibit fracture until the strain reaches 300% in the stress-strain curve; has a positive value that is obtained by first-order differentiation of an approximation formula for the stress-strain curve in a region up to the fracture point; and exhibits an evaporation residue of 150 µg/ml or less from a leaching solution obtained by immersing the resin composition in n-heptane as a solvent at 25°C for 1 hour. The resin composition is characterized by having a tensile stress of 4.5 to 8.0 MPa at a strain of 100% in the stress-strain curve and a tensile stress within a range from 11.0 to 19.0 MPa at a strain of 300%. The resin composition contains 48 to 93 parts by weight of an adipic acid-based polyester having a weight average molecular weight of 3,500 to 5,500 as a plasticizer with respect to 100 parts by weight of a thermoplastic resin, in particular a halogen-containing thermoplastic resin.

## Description

### Technical Field

The present disclosure relates to a flexible tube manufactured by extruding a thermoplastic resin composition.

### Background Art

Conventionally, roller pumps are known to transport liquid in a flexible tube, which is arranged in an arc along a substantially cylindrical inner wall surface of the housing, by rotating a roller along the inner wall to crush the flexible tube between the inner wall surface and the roller. Such roller pumps are used for feeding fluids, quantitative transfer, flow control, and the like, in artificial heart-lung machines and hemodialyzers for the medical field, in seasoning and flavor feeders for the food field, and in raw material feeders to reactors in the active pharmaceutical ingredient manufacturing process for the pharmaceutical field.

Flexible tubes used for such roller pumps are required to have flexibility and mechanical strength, as well as durability against repeated squeezing action by the peristaltic section of the roller pump. Conventionally, as flexible tubes for roller pumps, rubber tubes using materials represented by silicone or synthetic resin tubes using materials represented by soft vinyl chloride have been used. The flexible tubes made of rubber or synthetic resin are manufactured by extrusion molding, which allows for easy shaping. In addition, since the internal resistance to the fluid flow is minimal, these flexible tubes have a circular cross-sectional shape.

When using a circular flexible tube in a roller pump, gaps remain near the creased areas when the tube is crushed radially, leading to potential leaks and making it difficult to achieve a vacuum state within the flexible tube. In order to eliminate such a gap, a considerably large pressure loading is required. Furthermore, when the circular flexible tube is repeatedly crushed and returned under such pressure, if the elasticity of the flexible tube is not sufficient, the flexible tube may be dented and may not return to its original circular cross-sectional shape.

As a flexible tube of this type, the multilayer flexible tube disclosed in Patent Literature 1 comprises a first layer containing a polyolefin material having a flexural modulus of elasticity of 150 MPa or less and a second layer containing a blend of propylene polymer and styrene block copolymer. This multilayer flexible tube provides a desirable combination of features such as mechanical damping, hardness, single glass transition temperature, transparency, and minimum bend radius, while containing no additives that leach into the process stream and, in some cases, does not generate harmful by-products during incineration.

The multilayer flexible tube disclosed in Patent Literature 2 is a multilayer flexible tube having an inner layer containing a melt-processable fluoropolymer and an outer layer containing a melt-processable polymer with a lower shore hardness than the shore hardness of the inner layer. The fluoropolymer comprises a copolymer of polyvinylidene fluoride (PVDF) and hexafluoropropylene (HFP), and the hexafluoropropylene is present at a molar concentration of over 30% based on 100% in total of the copolymer (molar concentration). This multilayer flexible tube allows easy washing and resistance to contaminants.

### Citation List

### Patent Literature

Patent Literature 1: Japanese Patent No. 5475794
Patent Literature 2: Unexamined Japanese Patent Application Publication No. 2018-173172

### Summary of Invention

### Technical Problem

However, in the case of the multilayer flexible tube of the above-mentioned Patent Literature 1, the polyolefin material used for the multilayer flexible tube shows leaching of substances other than plasticizers from the inner surface of the flexible tube when oily fluid is circulated, which is undesirable in the medical, food, pharmaceutical, and other fields. The leaching of substances may cause changes in the physical properties, increase the risk of fracture, and reduction of the service life. In particular, when used in roller pumps where repeated crushing occurs, fracture, deformation and elongation of the multilayer flexible tube may cause reduction of the flow rate. Furthermore, since a multilayer structure is used to satisfy the mechanical properties, there is a concern about a decrease in service life due to interlayer peeling. Since the multilayer flexible tube of the above-mentioned Patent Literature 2 also has a multilayer structure, there is also concern about a decrease in service life due to interlayer peeling when used in a roller pump.

On the other hand, polyvinyl chloride, which is easy to process, has conventionally been used for flexible tubes. However, polyvinyl chloride also shows leaching of substances depending on the type of fluid, and uses low molecular weight plasticizers, such as DEHP (bis (2-ethylhexyl) phthalate) that is suspected of having health effects, are used. In transporting fluids used in the medical, food, pharmaceutical, and other fields, the plasticizers such as DEHP may leach into the fluid and become hazardous to health.

The present disclosure is made in light of the problems associated with the background art described above, and an objective of the present disclosure is to provide a flexible tube having favorable physical properties for roller pumps and high durability.

### Solution to Problem

The above-described objective is achieved by the present disclosure (1) to (5) below.
(1) A flexible tube formed by molding a thermoplastic resin composition into a tubular shape, wherein
   the resin composition does not exhibit fracture until a strain reaches 300% in a stress-strain curve,
   a value obtained by first-order differentiation of an approximation formula for the stress-strain curve in a region up to a fracture point is positive (+), and
   an amount of an evaporation residue of a leaching solution obtained by immersing the resin composition in n-heptane as a solvent at 25°C for 1 hour is 150 µg/ml or less.
(2) The flexible tube according to (1) described above, wherein the resin composition exhibits, in the stress-strain curve, a tensile stress of 4.5 to 8.0 MPa at a strain of 100% and a tensile stress within a range of 11.0 to 19.0 MPa at a strain of 300%.
(3) The flexible tube according to (2) described above, wherein the resin composition exhibits, in the stress-strain curve, a tensile stress of 4.9 to 7.0 MPa at a strain of 100% and a tensile stress within a range of 12.0 to 15.5MPa at a strain of 300%; and the IRHD hardness during the measurement ranges from 62 to 75 degrees.
(4) The flexible tube according to (2) described above, wherein the flexible tube is used in a peristaltic section of a roller pump.
(5) The flexible tube according to (2), (3), or (4) described above, wherein the flexible tube contains at least one selected from phthalic acid-based polyesters, adipic acid-based polyesters, trimellitic acid-based polyesters, or acetylcitric acid-based polyesters as a plasticizer(s).
(6) The flexible tube according to (5) described above, wherein 48 to 93 parts by weight of a polyester plasticizer having a weight average molecular weight of 3,500 to 5,500 as a plasticizer are contained with respect to 100 parts by weight of a halogen-containing thermoplastic resin.
(7) The flexible tube according to (6), wherein the polyester plasticizer is an adipic acid-based polyester.

### Advantageous Effects of Invention

The flexible tube of the present disclosure uses a thermoplastic resin, has favorable physical properties for roller pumps or the like, and enables stable quantitative transfer of liquids. In addition, use of a specific plasticizer results in less leaching to oily fluids, and the physical properties of the flexible tube are not changed and thus the durability is high. The less leaching to fluids allows for safe use in medical, food, pharmaceutical, and other fields.

### Brief Description of Drawings

FIG. 1 is a stress(σ)-strain(ε) curve for a flexible tube in one embodiment of the present disclosure; and
FIG. 2 illustrates strains (ε) and values obtained by first-order differentiation (d) in Example 1 of the present disclosure.

### Description of Embodiments

Embodiments of the present disclosure are described below. The flexible tube in this embodiment is a tubular body manufactured by extruding a resin composition comprising a thermoplastic resin into a tubular shape by an extruder.

In particular, the flexible tube in this embodiment comprises the resin composition having suitable physical properties for applications in roller pumps involving repeated deformation. The properties required in the applications are such that the flexible tube does not fracture until the strain reaches 300% in the stress-strain curve obtained by performing a tension test in accordance with the test method of JIS K6723 and has a positive (+) value that is obtained by first-order differentiation of an approximation formula for the stress-strain curve in a region up to the fracture point. Here, the fracture point is defined as a strain at which the tensile stress is maximum in a stress-strain curve. The approximation formula for the stress-strain curve can obtained by using a polynomial approximation function of spreadsheet software. Examples of the spreadsheet software include Microsoft Excel.

This makes the flexible tube highly durable when used in a roller pump, with little change in discharge volume over time.

In cases where values obtained by first-order differentiation of approximation formulae in a region up to the fracture point in the stress-strain curve of the flexible tube are not positive (+), the yield force of the flexible tube is small, resulting in large fluctuations in discharge volume and a decrease in the flow rate over time, which undesirably make the flexible tube incapable of maintaining stable performance as a roller pump.

As used herein, a roller pump, also called a tube pump or a peristaltic pump, comprises a flexible tube and a peristaltic section with multiple protrusions. A roller pump is a pump in which the peristaltic section rotates and push the flexible tube with the protrusions, thereby pushing out fluid in the flexible tube to transport the fluid.

The flexible tube has an evaporation residue of 150 µg/ml or less from a leaching solution obtained after leaching with n-heptane as a solvent at 25°C for 1 hour in a leaching test performed in accordance with the testing method in "Specifications and Standards for Foods, Additives, etc., III. Apparatus and Containers/ Packages D, in The Ministry of Health and Welfare Notification No. 370, 1959 (Revised: Ministry of Health, Labour and Welfare Notification No.267, August 2, 2002)." Evaporation residue is mainly leaching of the plasticizer of the flexible tube, and leaching of substances is undesirable in the medical, food, pharmaceutical, and other fields. Moreover, evaporation residue causes changes in the physical properties of the flexible tube, and when such a flexible tube is used in a roller pump, the flexible tube fractures or is deformed due to elongation or the like, resulting in reduced flow rate, which undesirably make the flexible tube incapable of maintaining stable performance as a roller pump. Preferably, the evaporation residue from a leaching solution using n-heptane as a solvent is 150 µg/mL or less, and more preferably 120 µg/mL or less.

Furthermore, in the stress-strain curve of the flexible tube, when the strain is 100% and the tensile stress is less than 4.5 MPa, the flexible tube easily elongates, resulting in reduced flow rate due to deformation such as elongation and fracture due to wear of the flexible tube meandering in the pump head. When the tensile stress is greater than 8.0 MPa, the flexible tube is hard to elongate, and when repeatedly crushed and returned, cracks appear and fracture occurs in a short time. When the strain is 300% and the tensile stress is outside the range of 11.0 to 19.0 MPa, the same elongation and cracking occur when the flexible tube undergoes plastic deformation due to operating loads such as long-duration operation of a roller pump or application to a roller pump with many rotations. Thus, in applications of roller pumps where repeated elastic deformation and plastic deformation occur, the flexible tube does not have high durability and cannot maintain stable performance. Therefore, in the stress-strain curve for the flexible tube, it is desired that the strain is 100% and the tensile stress is from 4.5 to 8.0 MPa, and the strain is 300% and the tensile stress is within 11.0 to 19.0 MPa. The IRHD hardness of the flexible tube at the points (measured in accordance with the test method of "ISO48, Rubber, vulcanized or thermoplastic - Determination of hardness") is in the range of 60 to 81 degrees.

More preferably, to make the flexible tube optimal for a roller pump, the flexible tube has, in its stress-strain curve, a tensile stress of 4.9 to 7.0 MPa at a strain of 100% and a tensile stress within a range from 12.0 to 15.5 MPa at a strain of 300%. The IRHD hardness at the points ranges from 62 to 75 degrees.

Next, the resin composition of the flexible tube according to the embodiments of the present disclosure is described.

The flexible tube of the present disclosure contains a thermoplastic resin. Any thermoplastic resins can be used, and a halogen-containing thermoplastic resin is preferably used.

Examples of the halogen-containing thermoplastic resin include, but not limited to, chlorine-containing resins such as polyvinyl chloride, chlorinated polyvinyl chloride, polyvinylidene chloride, chlorinated polyethylene, vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride terpolymer, vinyl chloride-styrene-acrylonitrile terpolymer, vinyl chloride-butadiene copolymer, vinyl chloride-isoprene copolymer, vinyl chloride-chlorinated propylene copolymer, vinyl chloride-vinylidene chloride-vinyl acetate terpolymer, vinyl chloride-maleate copolymer, vinyl chloride-methacrylate copolymer, vinyl chloride-acrylonitrile copolymer, vinyl chloride-various vinyl ethers copolymer, as well as mutually mixed materials thereof.

In addition, as necessary, blends, block copolymers, graft copolymers of the halogen-containing thermoplastic resins and other halogen-free synthetic resins, such as acrylonitrile-styrene copolymer, acrylonitrile-styrene-butadiene terpolymer, ethylenevinyl acetate copolymer, ethylene -ethyl (meth)acrylate copolymer, and polyester may be used.

In particular, polyvinyl chloride (hereinafter referred to as "PVC") is preferably used as the halogen-containing thermoplastic resin. Furthermore, a transparent or translucent PVC is preferably used. A specific example of the PVC corresponds to, for example, TK-1700E from Shin-Etsu Chemical Co., Ltd. Embodiments using PVC are described below.

The resin composition that constitutes the flexible tube of the present disclosure also contains, with respect to 100 parts by weight of PVC, 48 to 93 parts by weight of a plasticizer and 0.1 to 3.0 parts by weight of an acrylic lubricant as main ingredients.

In addition to the ingredients described above, as necessary, the resin composition may also contain various additives (for example, heat stabilizers, light stabilizers, ultraviolet absorbers, antioxidants, anti-fogging agents, and antistatic agents).

Examples of the plasticizer include polyester plasticizers such as phthalic acid-based polyester, adipic acid-based polyester, trimellitic acid-based polyester, acetylcitric acid-based polyester, and preferred examples include polyester plasticizers having a weight average molecular weight of 3,500 to 5,500, and more preferred examples include polyester plasticizers having a weight average molecular weight of 4,000 to 5,000. The polyester plasticizer particularly preferably is an adipic acid-based polyester.

In cases where the polyester plasticizer content is less than 48 parts by weight with respect to 100 parts by weight of PVC, the resin composition is too hard. Conversely, in cases where the polyester plasticizer content is more than 93 parts by weight, the resin composition is too soft. Therefore, the polyester plasticizer is preferably contained in an amount of 48 to 93 parts by weight, and more preferably in an amount of 68 to 87 parts by weight.

Examples of the acrylic lubricant include copolymers containing alkyl acrylate and/or alkyl methacrylate as an essential ingredient(s), that is, acrylic resins and/or methacrylic resins. In particular, a transparent or translucent acrylic and/or methacrylic resin is preferably used.

A higher molecular weight of the lubricant comprising an acrylic and/or methacrylic resin results in excessively promoted PVC gelation, and thus a lubricant comprising an acrylic and/or methacrylic resin having a weight average molecular weight of 400,000 or less is preferably used. More preferably, a lubricant comprising an acrylic and/or methacrylic resin having a weight average molecular weight of 10,000 to 400,000, and still more preferably a lubricant comprising an acrylic and/or methacrylic resin having a weight average molecular weight of 100,000 to 300,000.

In cases where the amount of the lubricant comprising an acrylic and/or methacrylic resin is less than 0.1 parts by weight with respect to 100 parts by weight of PVC, the contact/friction force generated between the die (mold) provided inside the extruder and the resin composition flowing along the die is not sufficiently reduced. Consequently, undesirable matter, such as molten metal inside the extruder and die drool generated at the exit of the die, makes it impossible to obtain flexible tubes with uniform wall thickness and pressure resistance. Conversely, in cases where the amount is more than 3.0 parts by weight, the contact/friction force generated between the die inside the extruder and the resin composition flowing along the die is excessively reduced, and as a result, flexible tubes of the desired shape cannot be obtained.

Thus, as the lubricant comprising an acrylic and/or methacrylic resin, 0.5 to 1.2 parts by weight of a lubricant comprising an acrylic and/or methacrylic resin having a weight average molecular weight of 100,000 to 300,000 is preferably contained. More preferably, about 0.8 parts by weight of a lubricant comprising an acrylic and/or methacrylic resin having a weight average molecular weight of about 200,000 to 230,000 is contained. A specific example of the acrylic lubricant (lubricant comprising an acrylic and/or methacrylic resin) having a weight average molecular weight of about 200,000 to 230,000 corresponds to METABLEN (registered trademark) L-1000 from Mitsubishi Chemical Corporation, or the like.

In the process of manufacturing a flexible tube according to an embodiment of the present disclosure, the resin composition containing, with respect to 100 parts by weight of PVC, 48 to 93 parts by weight of an adipic acid-based polyester having a weight average molecular weight of 3,500 to 5,500 and 0.1 to 3.0 parts by weight of a lubricant comprising an acrylic and/or methacrylic resin having a weight average molecular weight of 10,000 to 400,000 is extruded into a tubular shape by an extruder according to a known method to mold a flexible tube.

The flexible tube in this embodiment has a tensile strength and strain set within a predetermined range based on the stress-strain curve, and has high durability and maintains stable performance in applications where elastic or plastic deformation occurs repeatedly in roller pumps. Therefore, the flexible tube can withstand applications where crushing force is applied repeatedly in roller pumps, allowing for stable quantitative transfer of liquids and the like.

In addition, the flexible tube does not break or crack even when the flexible tube is repeatedly crushed and restored in the peristaltic section of a roller pump for a long period of time. Furthermore, the flexible tube is not plastically stretched by the movement of the roller, and the flow rate is not reduced. The flexible tube in an embodiment of the present disclosure has a monolayer structure. Thus, interlaminar separation such as in multilayer structures does not occur.

In addition, adipic acid-based polyesters having a weight average molecular weight of 3,500 to 5,500 exhibit excellent oil resistance and less leaching, and thus can be used safely in medical, food, pharmaceutical, and other fields.

The flexible tube of the present disclosure is not limited to the embodiments described above, and as necessary, the resin composition can also contain various additives (for example, heat stabilizers, light stabilizers, ultraviolet absorbers, antioxidants, anti-fogging agents, and antistatic agents) in usual amounts. The size of the flexible tube is not limited, and high durability and safety can be achieved regardless of the size of the flexible tube.

### Examples

Examples A1 to A7 and Comparative Examples B1 to B6 of the present disclosure are described below. Thermoplastic resins and plasticizers were mixed to obtain a plurality of flexible tubes 1 to 12 (inner diameter: 4.8 mm, wall thickness: 1.6 mm). In addition, flexible tubes (inner diameter 10.0 mm, wall thickness: 1.0 mm) made using the same material ratios as Examples A1 to A7 and Comparative Examples B1 to B6 were cut open and shaped into a similar shape as the dumbbell test specimen type 2 specified in JIS K 6251 to obtain test specimens 1 to 12. The flexible tubes 1 to 12 and the test specimens 1 to 12 were tested for their physical properties.

In Examples A1 to A6, 100 parts by weight of PVC; Plasticizer 1 (adipic acid-based polyester having a weight average molecular weight of 4,000 to 5,000) as a plasticizer in an amount of 50 parts by weight for Example A1, 70 parts by weight for Example A2, 80 parts by weight for Example A3, 85 parts by weight for Example A4, 91 parts by weight for Example A5, or 103 parts by weight for Example 6; and 0.8 parts by weight of a lubricant comprising acrylic resins and methacrylic resins, having a weight average molecular weight of 200,000 to 230,000 (Mitsubishi Chemical Corporation, METABLEN (registered trademark) L-1000) as a lubricant were mixed and extruded from an extruder to obtain the flexible tubes 1 to 6 and the test specimens 1 to 6.

In Example A7, 100 parts by weight of PVC; 85 parts by weight of Plasticizer 1 (adipic acid-based polyester having a weight average molecular weight of 4,000 to 5,000) as a plasticizer; and 3.0 parts by weight of an acrylic lubricant having a weight average molecular weight of 200,000 to 230,000 (Mitsubishi Chemical Corporation, METABLEN (registered trademark) L-1000) as a lubricant were mixed and extruded from an extruder to obtain the flexible tube 7 and the test specimen 7.

In Comparative Example B1, 100 parts by weight of PVC; 35 parts by weight of Plasticizer 1 (adipic acid-based polyester having a weight average molecular weight of 4,000 to 5,000) as a plasticizer; and 0.8 parts by weight of an acrylic lubricant having a weight average molecular weight of 200,000 to 230,000 (Mitsubishi Chemical Corporation, METABLEN (registered trademark) L-1000) as a lubricant were mixed and extruded from an extruder to obtain the flexible tube 8 and the test specimen 8.

In Comparative Example B2, 100 parts by weight of PVC; 50 parts by weight of Plasticizer 2 (adipic acid-based polyester having a weight average molecular weight of 2,000 to 3,000) as a plasticizer; and 0.8 parts by weight of an acrylic lubricant having a weight average molecular weight of 200,000 to 230,000 (Mitsubishi Chemical Corporation, METABLEN (registered trademark) L-1000) as a lubricant were mixed and extruded from an extruder to obtain the flexible tube 9 and the test specimen 9.

In Comparative Example B3, 100 parts by weight of PVC; and Plasticizer 3 (dioctyl phthalate having a weight average molecular weight of 300 to 500) as a plasticizer were mixed and extruded from an extruder to obtain the flexible tube 10 and the test specimen 10.

In Comparative Example B4, in accordance with the description of Sample 1 in Example 6 in Japanese Patent 5475794, a polyolefin material (Dow Chemicals Engage (registered trademark) 8200) was extruded from an extruder to obtain the flexible tube 11 and the test specimen 11.

In Comparative Example B5, in accordance with the description of the paragraph [0084] in Patent Literature 2 (Unexamined Japanese Patent Application Publication No. 2018-173172) described above, fluorocarbon polymer (Arkema, Kynar Ultraflex) and polyurethane (BASF SE, Elastallon C78A) were extruded from an extruder to obtain the flexible tube 12 and the test specimen 12 such that the flexible tube had an inner layer comprising fluorocarbon polymer having a wall thickness of 0.2 mm (0.008 in) and an outer layer comprising polyurethane attached thereto, and had a wall thickness of 1.6 mm and an inner diameter 4.8mm.

In Comparative Example B6, PVC was used, but any plasticizer was not added, resulting in failure of molding, and thus the flexible tube 13 and the test specimen 13 were not obtained.

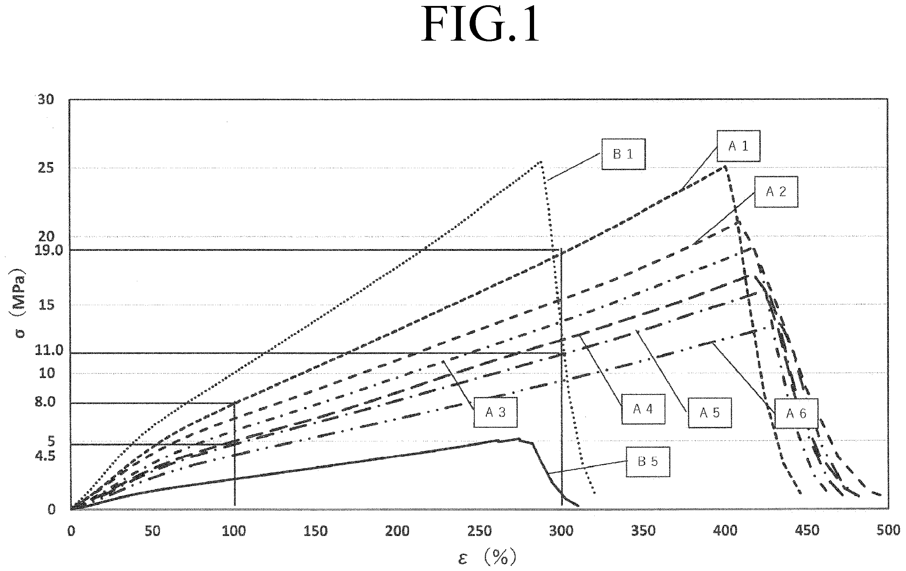

First, the samples of Examples A1 to A7 and Comparative Examples B1 to B5 were subjected to a leaching test in accordance with the testing method in "Specifications and Standards for Foods, Additives, etc., III. Apparatus and Containers/ Packages D, in The Ministry of Health and Welfare Notification No. 370, 1959 (Revised: Ministry of Health, Labour and Welfare Notification No.267, August 2, 2002)" to measure the amount of the evaporation residue using n-heptane as a leaching solution. The flexible tubes 1 to 12 as samples were totally immersed in n-heptane as a leaching solution and left to stand at 25°C for 1 hour to prepare test solutions. In addition, a tensile test was performed in accordance with the testing method in JIS K 6723, and the results are shown in Table 1 and FIG. 1. Using the test specimens 1 to 12 as samples, the measurement was performed five times for each of the test specimens 1 to 12 under a test atmosphere of 23 ± 2°C and a relative humidity of 50 ± 10%, and the mean values of the data in which the measurement results were included in the confidence interval (95% probability) are shown in Table 1 and FIG. 1. Autograph AGS-X from Shimadzu Corporation was used as a tester, and the tensile test was performed at a tension speed of 200 mm/min. For the flexible tubes of Examples 1 to 6, Table 1 shows the amounts of the evaporation residue in the leaching test, whether positive or negative for the value obtained by first-order differentiation of the approximation formula for the stress-strain curve until fracture occurred, the tensile stress at a strain of 100% and 300%, the strain at fracture, the tensile stress at fracture, and, the IRHD hardness (measured with Micro Normal Rubber Hardness Tester MICRO-IRHD-1 manufactured by Excel Inc. according to ISO48, Rubber, vulcanized or thermoplastic - Determination of hardness).

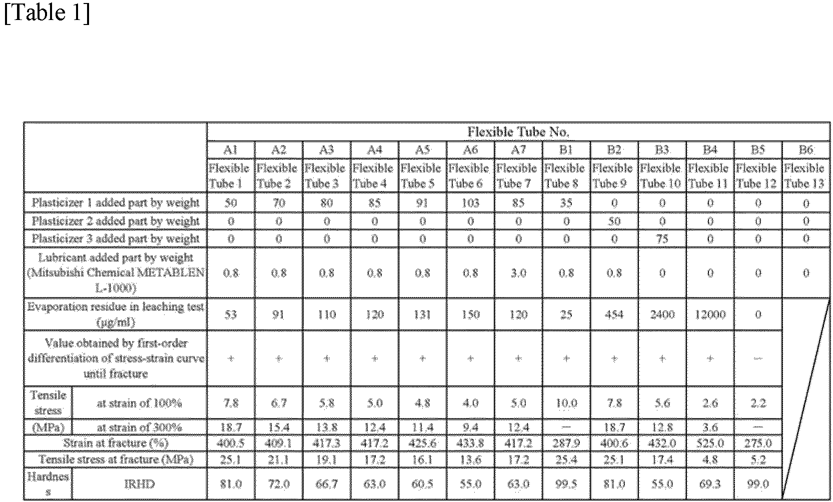

The fracture point is a strain at which the tensile stress obtained from the tensile test is maximum. As an example, Table 2 shows strains and tensile stresses near the fracture point of Example A1.

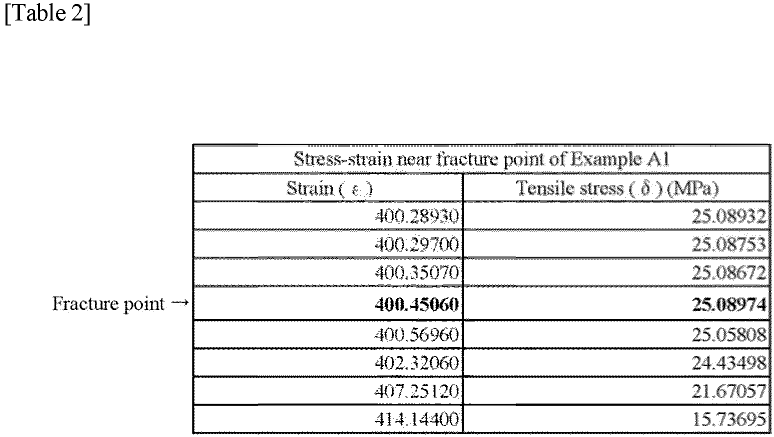

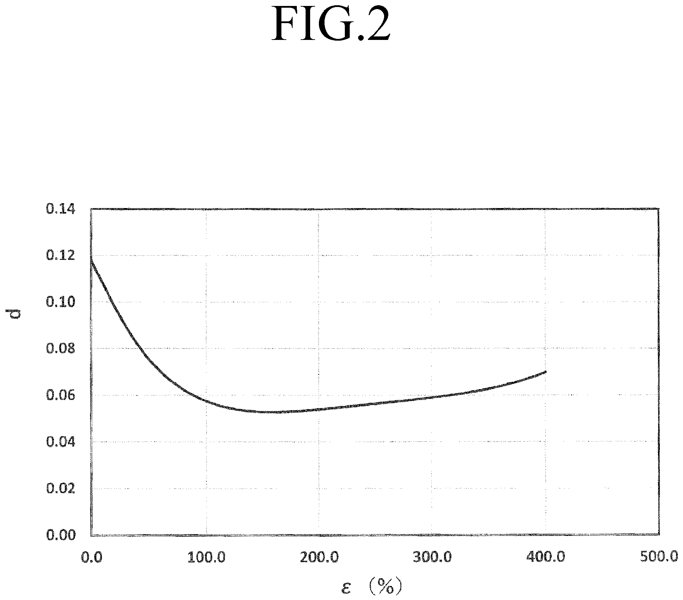

For the approximation formula for the stress-strain curve, the strain at every 0.01 seconds up to the fracture point, as measured by a tensile test, was plotted on a scatter diagram. The approximate strain values were calculated using a 6th-degree polynomial (with constants valid to 30 decimal places) obtained using the polynomial approximation feature of spreadsheet software (Excel 365 from Microsoft Corporation) as the approximation formula for strain. Using the tensile stress and approximate strain values obtained from the tensile test up to the fracture point, a 6th-degree polynomial was obtained using the same method and considered as an approximation formula for the stress-strain curve until fracture. By dividing the increase in the approximate value of tensile stress obtained from the approximation formula for the stress-strain curve by the increase in the approximate strain value every 0.01 seconds, the slope of the approximation formula for the stress-strain curve every 0.01 seconds was calculated, which was considered as the value of the first-order differentiation. Table 3 and FIG. 2 show, as an example, strain, approximate value of strain, tensile stress, approximate value of tensile stress, and value of first-order differentiation from 0.01 to 0.10 seconds and near the fracture point in Example 1, as well as a graph of strain vs. value of first-order differentiation up to the fracture point.

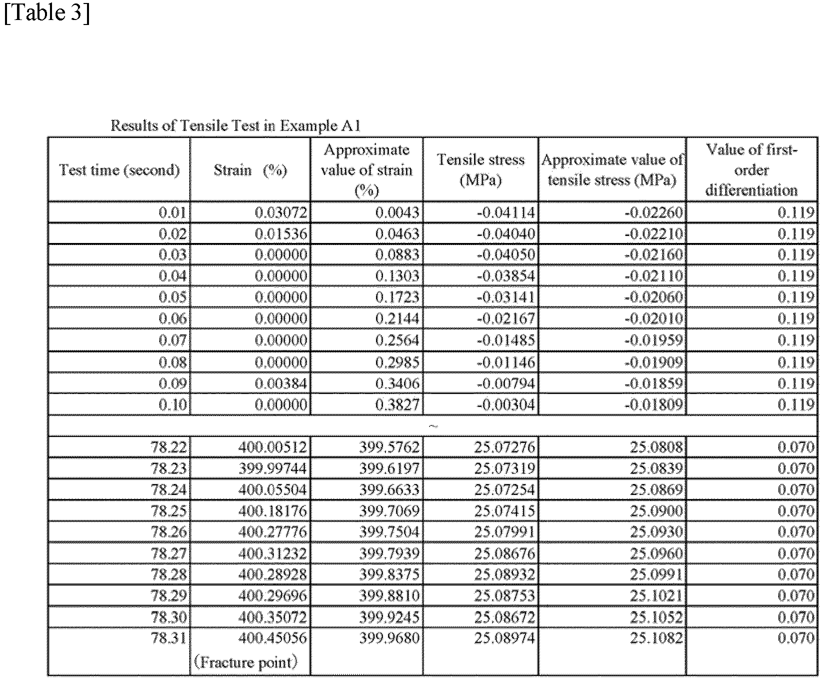

Comparative Example B1 fractured before the strain reached 300% in the tensile test. This is due to high tensile stress against elongation, which makes Comparative Example B1 difficult to elongate. Thus, when used in roller pumps, Comparative Example B1 has low durability against repeated deformation. Therefore, Comparative Example B1 is not suitable for roller pumps.

Comparative Examples B2 to B4 showed more than 150 µg/ml of evaporation residue in the leaching test and showed high amounts of leaching substances such as plasticizers, and thus Comparative Examples B2 to B4 cannot be used safely in the medical, food, pharmaceutical, and other fields. In addition, the physical properties are also changed, resulting in low durability when used in roller pumps. Therefore, Comparative Examples B2 to B4 are not suitable for roller pumps.

Comparative Example B5 fractured before the strain reached 300% in the tensile test, and exhibited a region in which the values obtained by first-order differentiation of the stress-strain curve until fracture are negative. This is because interlayer peeling between the two different materials occurred. When used in a roller pump, the flow rate is not stable due to deformation of the flexible tube, and contaminants are also generated due to peeling of the inner layer. Therefore, Comparative Example B5 is not suitable for roller pumps.

Examples A1 to A7 exhibited stress-strain curves as shown in Table 1 and FIG. 1 (Examples 1 to 6), in which fracture did not occur until the strain reached 300%, and values obtained by first-order differentiation of approximation formulae for the stress-strain curve until fracture were usually positive (+). This allowed the tensile stress to increase according to the strain until fracture, and in particular, when used in a roller pump, the flexible tube has little change in the discharge volume over time and thus is highly durable.

In view of this point, in order ensure a stable flow rate in a roller pump, a flexible tube comprising the resin composition that does not fracture until the strain reaches 300% in the stress-strain curve; and has positive values that are obtained by first-order differentiation of approximation formulae for the stress-strain curve in a region up to the fracture point; and exhibits an evaporation residue of 150 µg/ml or less from a leaching solution obtained by immersing the resin composition in n-heptane as a solvent at 25°C for 1 hour is desirable.

Next, Examples A1 to A7 and Comparative Examples B1 to B5 were evaluated for their performances as tubes in a roller pump, and the results are shown in Table 4. For the roller pump, a roller pump head 313X manufactured by Watson-Marlow Fluid Technology Solutions was used with a Type 313/WI pump manufactured by Isowatec Corporation, and flexible tubes 1 to 12 obtained by molding the resin compositions of Examples 1 to 7 and Comparative Examples B1 to B5 by an extrusion molding machine into a tubular shape having a predetermined dimensions of inner diameter (4.8 mm) and thickness (1.6 mm) were attached as sample tubes. The performance of the roller pump tubes when n-heptane at 23 ± 3°C was distributed at a pump head roller speed of 150 rpm was evaluated based on the following indices, which are listed in Table 4.

"Contaminants" is the result of a two-grade evaluation for whether or not contaminants are present in the fluid: double circle for "not present" and cross for "present." "Rate of change in flow rate after 1 hour" is the result of a four-grade evaluation for the rate of change in the flow rate at 1 hour after the start of operation of the roller pump relative to the initial flow rate: double circle for "less than 3%," circle for "3% or more and less than 5%," triangle for "5% or more and less than 7%," and cross for "7% or more."

"Duration of flow rate" is the result of a four-grade evaluation for the time from the start of operation until the flow rate reaches 90% of the initial flow rate: double circle for "1,000 hours or more," circle for "600 hours or more and less than 1,000 hours," triangle for "200 hours or more and less than 600 hours," and cross for "less than 200 hours."

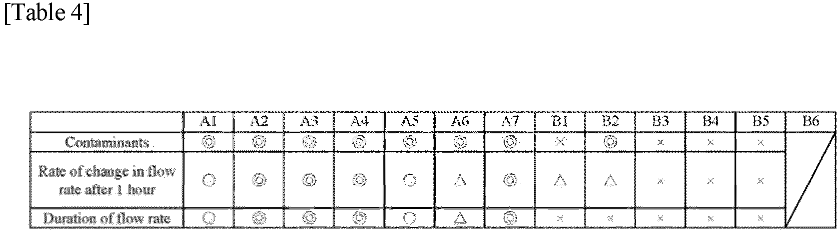

Examples A1 to A7 have good evaluation results in all of "contaminants," "rate of change in flow rate after 1 hour," and "duration of flow rate," whereas Comparative Examples B1 to B5 have poor evaluation results in any of "contaminants," "rate of change in flow rate after 1 hour," and "duration of flow rate."

Comparative Example B1 exhibited high tensile stress in relation to the amount of strain, and thus repeated crushing and returning in a peristaltic section of a roller pump resulted in cracking, which led to fracture in a short time, and also resulted in damage to the inner layer found, exhibiting poor evaluation results in "contaminants" and "duration of flow rate."

Comparative Examples B2 and 3 contain a plasticizer with a weight average molecular weight of less than 3,500, which resulted in high amount of "evaporation residue in the leaching test," as well as in changes in the physical properties due to leaching of the plasticizer, exhibiting poor evaluation result in "duration of flow rate." Comparative Example B2 resulted in fracture after 8 hours, exhibiting significantly poor evaluation result in "duration of flow rate." Comparative Example B3 had high amount of "evaporation residue in the leaching test," as well as damage to the inner layer found due to deformation of the flexible tube, exhibiting poor evaluation result in "contaminants" as well.

Comparative Example B4 had significantly high amount of "evaporation residue in the leaching test" of 12,000 µg/ml, resulting in changes in the physical properties due to the material leaching and damage to the inner wall due to deformation of the flexible tube, exhibiting poor evaluation results in all of "contaminants," "rate of change in flow rate after 1 hour," and "duration of flow rate."

Comparative Example B5 showed good evaluation result in "evaporation residue in the leaching test," but had interlayer peeling, exhibiting poor evaluation results in all of "contaminants," "rate of change in flow rate after 1 hour," and "duration of flow rate."

Examples A1 to A7 showed evaporation residue of 150 µg/ml or less, which meets the leaching criteria in accordance with the testing method in "Specifications and Standards for Foods, Additives, etc., III. Apparatus and Containers/ Packages D, in The Ministry of Health and Welfare Notification No. 370, 1959 (Revised: Ministry of Health, Labour and Welfare Notification No.267, August 2, 2002)," and thus can be used safely in the medical, food, pharmaceutical, and other fields.

Furthermore, Examples A1 to A7 exhibited excellent performance as tubes in roller pumps, and in particular, and Examples A2 to A4 and A7 gave especially good evaluation results in "rate of change in flow rate after 1 hour," and "duration of flow rate."

From the results, it was demonstrated that flexible tubes comprising the resin composition that did not fracture until the strain reaches 300% in the stress-strain curve; and had positive values that were obtained by first-order differentiation of approximation formulae for the stress-strain curve in a region up to the fracture point; and exhibited an evaporation residue of 150 µg/ml or less from a leaching solution obtained by immersing the resin composition in n-heptane as a solvent at 25°C for 1 hour were suitable for roller pumps. In particular, in cases where the evaporation residue is 120µg/ml or less, there is little material leaching and the physical properties of the flexible tube do not change, resulting in high durability. The flexible tube in this Example exhibits little material leaching and has a predetermined relationship between strain and tensile stress, and thus can be used in roller pumps to provide stable quantitative transfer of liquids. The flexible tube in this Example can be used safely with no impact on the human body, especially in the medical, food, pharmaceutical, and other fields.

## Claims

1. A flexible tube formed by molding a thermoplastic resin composition into a tubular shape, wherein
the resin composition does not exhibit fracture until a strain reaches 300% in a stress-strain curve,
a value obtained by first-order differentiation of an approximation formula for the stress-strain curve in a region up to a fracture point is positive, and
an amount of an evaporation residue of a leaching solution obtained by immersing the resin composition in n-heptane as a solvent at 25°C for 1 hour is 150 µg/ml or less.

2. The flexible tube according to claim 1, wherein the resin composition exhibits, in the stress-strain curve, a tensile stress of 4.5 to 8.0 MPa at a strain of 100% and a tensile stress within a range of 11.0 to 19.0 MPa at a strain of 300%.

3. The flexible tube according to claim 2, wherein the resin composition exhibits, in the stress-strain curve, a tensile stress of 4.9 to 7.0 MPa at a strain of 100% and a tensile stress within a range of 12.0 to 15.5MPa at a strain of 300%, and the IRHD hardness at the points ranges from 62 to 75 degrees.

4. The flexible tube according to claim 2, wherein the flexible tube is used in a peristaltic section of a roller pump.

5. The flexible tube according to claim 2, 3, or 4, wherein the flexible tube contains at least one plasticizer selected from phthalic acid-based polyesters, adipic acid-based polyesters, trimellitic acid-based polyesters, or acetylcitric acid-based polyesters.

6. The flexible tube according to claim 5, wherein the resin composition contains 48 to 93 parts by weight of a polyester plasticizer having a weight average molecular weight of 3,500 to 5,500 as a plasticizer with respect to 100 parts by weight of a halogen-containing thermoplastic resin.

7. The flexible tube according to claim 6, wherein the polyester plasticizer is an adipic acid-based polyester.
